# EUROPEAN PATENT SPECIFICATION

(11) **EP 3 572 979 B1**
(45) Date of publication and mention of the grant of the patent: **13.10.2021**
(21) Application number: 19176292.1
(22) Date of filing: 23.05.2019
(51) Int. Cl.: G06K 9/00

(54) **COMPARING AUDIOVISUAL PRODUCTS**
VERGLEICH VON AUDIOVISUELLEN PRODUKTEN
COMPARAISON DE PRODUITS AUDIOVISUELS

(30) Priority: 23.05.2018 GB 201808496
(43) Date of publication of application: 27.11.2019
(73) Proprietor: ZOO Digital Ltd, Sheffield S1 4LW (GB)
(72) Inventor: STONE, Elizabeth, Sheffield, S1 4LW (GB)
(74) Representative: EIP

(56) References cited:
- US-A1- 2011 116 719
- US-A1- 2015 304 705
- US-A1- 2016 042 761

## Description

### Technical Field

The present invention relates to comparing audiovisual products and, particularly, to an apparatus that compares audiovisual products and a computer-implemented method and a computer-readable medium of the same.

### Background

During production of an audiovisual product (for example, a film, a television show, an online video) different versions of the audiovisual product are typically created. From one version to the next, modifications may be made to the audiovisual product, for example, to add, remove or modify frames containing video and/or audio content.

An additional part of the production process may be to add additional content, such as voice dubbing comprising one or more different languages, and/or multi-language captioning and/or subtitling. Such additional content may take significant time to create and it is sometimes desirable to produce the content in parallel with versions of the audiovisual product. However, if the additional content is produced in parallel, changes to the audiovisual product may create the need to modify the respective additional content, which may be additionally time-consuming.

US 2015/304705 A1 discloses a method of synchronisation of different versions of multimedia content.

### Summary

According to an aspect of the present disclosure there is provided an apparatus, as defined in appended claim 1. According to another aspect of the present disclosure there is provided a method of mapping version of an audiovisual product, as defined in appended claim 9. According to a further aspect of the present disclosure there is provided a computer readable medium, as defined in appended claim 10.

### Brief Description of the Drawings

Embodiments will now be described, by way of example only, with reference to accompanying drawings, in which:
Figure 1 is a schematic block diagram of an audiovisual product mapping apparatus according to an example.
Figure 2 is a graphical depiction of an audio fingerprint, according to an example.
Figure 3 is a flowchart of a method of mapping versions of an audiovisual product, according to an example.
Figure 4A is a flowchart of a method of matching regions of versions of an audiovisual product, according to an example.
Figure 4B is a schematic diagram of matching regions of versions of an audiovisual product, according to an example.
Figure 5 is a schematic diagram of potential matching regions of the first version of the audiovisual product, according to an example.
Figure 6 is a schematic illustration of a map, according to an example.
Figure 7 is a schematic illustration of a user interface, according to an example.
Figure 8 is a visualisation of using a map of the first and second versions to add additional content to the second version, according to an example.
Figure 9 is a schematic block diagram of an audiovisual product mapping system, according to an example.

### Detailed Description

During production of an audiovisual product, additional content may be generated to complement the audiovisual content of the audiovisual product. The additional content may contain information on the audiovisual content and may be regarded as meta-content in the same way that meta-data related to an image file may include details (for example, descriptive metadata including keywords related to the image) relevant to the content of the image.

In the context of an audiovisual product, such additional content (meta-content) can include dubbing, captions, and subtitles. It is known to generate the additional content in parallel with the production of a main audiovisual product, such as a film or a television program. This is to reduce the overall production time required before the audiovisual product can be distributed, perhaps, in multiple territories. A downside of parallel production, however, is that if changes are made to the audiovisual product, for instance to add, delete or modify scenes during production or post-production phases, it is likely that associated additional content will also need to be changed. Often, the producers of the additional content - and there may be multiple producers of each of the different kinds of additional content in each of the different language territories around the world - may receive a series of 'versions' of the audiovisual product over time and as and when changes are made.

One way to manage the production of any revised additional content is to establish which changes have been made to the audiovisual product and, then, assess whether fresh, matching additional content is required or whether content needs to be deleted, modified or moved. This can be an extremely time-consuming task. For instance, it may be achieved by viewing past and new versions of the audiovisual product concurrently, side-by-side, to identify the differences, before any fresh additional content can be produced.

Examples aim to provide an efficient solution to identifying changes between versions of an audiovisual product. According to examples, versions of audiovisual products are compared in an automated fashion by using the respective audio stream components as a proxy for identifying differences between the versions. The present inventors have shown that such comparisons between audio streams can provide a robust indication of similarity (or difference) even when, after post-production for example, additional sound effects (e.g. background sound effects) have been added to the later version that do not exist on the earlier version. While such audio streams may sound quite different to the human ear, it has been determined that the respective similarities can be ascertained in a reliable way using appropriate audio signal processing, as will be described.

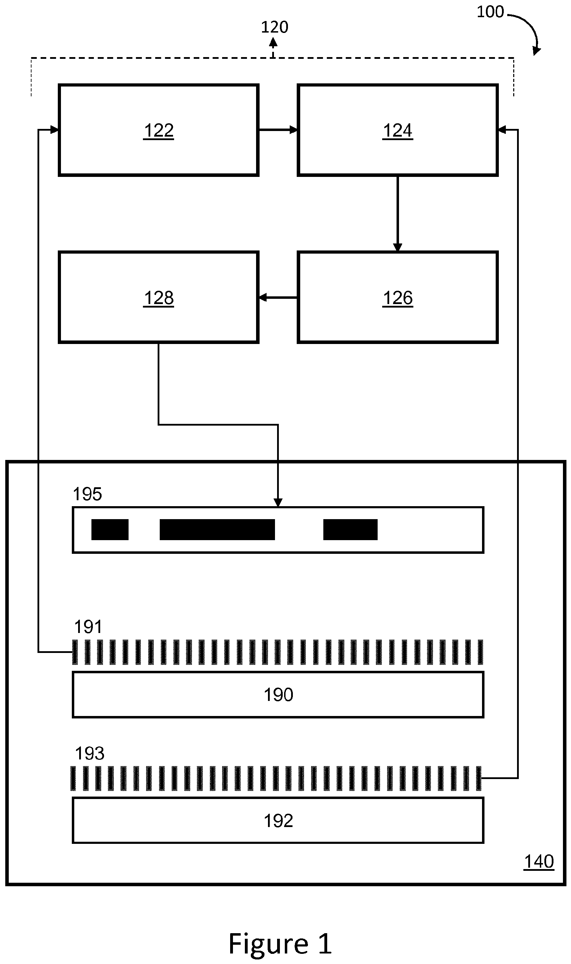

Figure 1 illustrates an audiovisual product mapping apparatus 100, according to an example. The apparatus 100 has a processing engine 120 communicatively coupled to a memory 140, for example random access memory. The processing engine 120 has an audio fingerprint identifier processor 122, an audio fingerprint matcher processor 124, a region identifier processor 126, and a mapping processor 128.

The contents of the memory 140 are illustrated in Figure 1. The memory 140 stores a first version of an audiovisual product 190 and a second version of the audiovisual product 192. An audiovisual product according to the present example contains at least an audio (sound) stream component and a visual (video) stream component. During production of an audiovisual product, modification (e.g. editing) processes are used that create newer versions of an audiovisual product from older versions of the same audiovisual product. For the present purposes, the second version of the audiovisual product 192 in memory 140 is a newer version of the audiovisual product than the first version of the audiovisual product 190.

The first and second versions of the audiovisual product 190,192 stored by the memory 140 have corresponding audio fingerprints - first version audio fingerprints 191 and second version audio fingerprints 193 also stored by memory 140 and depicted in Figure 1. Each individual audio fingerprint is associated with a temporal location (i.e. a time or time-stamp) within the respective version of the audiovisual product.

In use, the audio fingerprint identifier processor 122 identifies an audio fingerprint of the first version audio fingerprints 191 of the audiovisual product 190. The audio fingerprint processor 122 indicates the identified audio fingerprint, or data representative thereof, to the audio fingerprint matcher processor 124. The audio fingerprint matcher processor 124 searches for a matching audio fingerprint associated with a temporal location within the second version audio fingerprints 193 of the audiovisual product 192.

If a matching audio fingerprint is found in the second version audio fingerprints 193 of the audiovisual product 192, the region identifier processor 126 determines whether a region in the first version 190, comprising the temporal location of the respective audio fingerprint, matches a corresponding region in the second version 192, comprising the temporal location of the second respective audio fingerprint. If a matching region is determined, the mapping processor 128 facilitates storage of an indication of the temporal location of the respective matching region in a map 195 stored by memory 140 representing at least one of the first and second versions 190, 192. In the present context, the map 195, for example, may comprise a database or data structure such as an array or the like storing data representing locations in one, other or both of the audiovisual products. The locations in the audiovisual products may be indicated, for instance, in the map 195 by time stamps representing the respective playback point in time. Against timestamps, the map 195 may record indicators such as whether there is a match, no match, or such like, for respective timestamps.

In the example of Figure 1, the map 195 stored by memory 140 illustrates matching regions between the first and second versions 190, 192 using blocks extending across the temporal locations for which a matching region has been identified. In addition, or as an alternative, the visual representation of the map 195 may illustrate new regions rather than matching regions. The new regions may include (i) regions in which a new audiovisual component has been created and added to the pre-existing audiovisual product, and/or (ii) non-matching regions, such as regions where the visual component remains the same, but the audio component of the product has been modified.

Processors (122, 124, 126, 128) of the processing engine 120 of the audiovisual product mapping apparatus 100 may be located in a single computer, in a single server, across different networked computers, and/or across different networked servers. The processing engine 120 and respective processors may comprise or be in the form of software, hardware, or both.

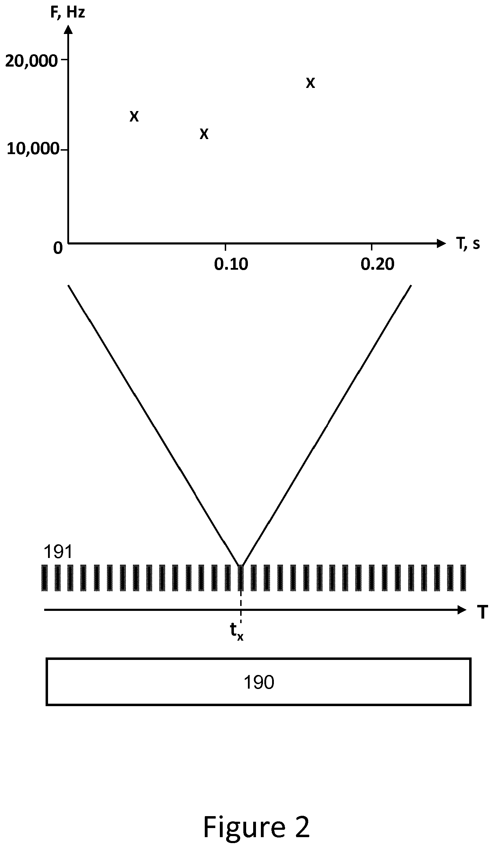

In general, an audio fingerprint is generated based on a frequency characteristic associated with a respective temporal location within an audiovisual product. Referring to Figure 2, an example basis of an audio fingerprint of the first version audio fingerprints 191 of the audiovisual product is illustrated in a graph that plots frequency, F, on the y-axis against time, T, on the x-axis. In the depicted example, the audio fingerprint is based on frequency characteristics at the temporal location tₓ of the first version 190. In this example, the temporal location tₓ contains a section of audiovisual content that is 0.2 seconds long. The audio fingerprint generation process takes multiple frequency-time pairs that are local peaks within a time section, represented in Figure 2 by "x", and creates fingerprint hashes, which are single values representing pairs of frequencies and the time difference between them. In one example, the duration of the time section may be 0.1 seconds, 0.25 seconds, or 0.3 seconds, or may be longer or shorter, as determined to ensure reliable matching of fingerprints between versions of audiovisual products.

In one example, an audio fingerprint may be generated by the fingerprint identifier processor 122 using a Fast Fourier Transform over each received (or processed) section of audiovisual content and output respective frequency-time components as illustrated in Figure 2.

In one example, an audio fingerprint may contain up to 50 fingerprint hashes.

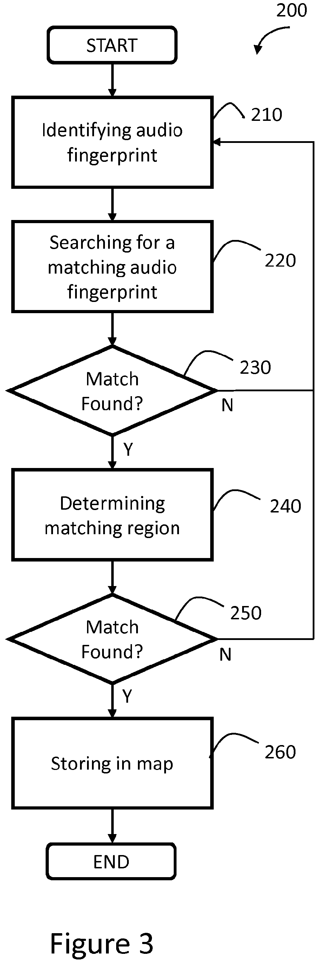

Referring to Figure 3, a computer-implemented method 200 of mapping versions of an audiovisual product is shown. Before the method 200 is implemented, the first version 190 and the second version 192 of the audiovisual product each consist of unprocessed audiovisual content. That is, since the method 200 has not yet been implemented, the audiovisual content of both the first version 190 and second version 192 is unsearched audiovisual content. As the method 200 proceeds, the number of processed areas of audiovisual content within each of the first and second versions increases, as explained below.

The method 200 starts at block 210, where an audio fingerprint of a first version 190 of an audiovisual product is identified. In one example, the identification may be made at random from within the first version 190. In other examples, a first (and any subsequent) audio fingerprint may be selected at the beginning of the audiovisual product, from any other pre-determined point or by using another scheme, such as a binary search scheme. It has been shown, however, that, due to the very different forms each audiovisual product may take, a random selection operates relatively efficiently and will help find the largest matches between the videos first. As explained above, at the start of method 200 the first version 190 consists entirely of unsearched audiovisual content. In any repetitions of the method 200, the first version 190 will consist of areas that have been searched in relation to the second version (and either identified as matching or non-matching with the second version 192) and areas that have not yet been searched. The identification of an audio fingerprint in block 210 is restricted to the areas that have not yet been searched.

In any event, after the identification has been made, the method 200 moves on to block 220 where a search is carried out for a matching audio fingerprint in the second version 192 of the audiovisual product. According to the present example, the search for a matching audio fingerprint may be conducted by scanning each unprocessed area of the second version 192 (or data representing the second version) from the start thereof until a match is found (or not). As explained above, at the start of the method 200 the second version 192 consists entirely of unprocessed audiovisual content. Accordingly, the first search of block 220 for a matching audio fingerprint searches the whole of the second version 192. For subsequent searches, the searching of block 220 is restricted to areas of the second version 192 that have not been matched to a region in the first version 190.

In one example, the searching first occurs in the largest un-matched region of the second version, and then the next-largest, and so on, until all the un-matched regions of the second version have been searched.

Next, a decision is made at block 230 as to whether an audio fingerprint match has been found. As described in relation to Figure 2, an audio fingerprint may contain a number of fingerprint hashes. For the decision of block 230, a matching audio fingerprint is determined to have been found when all, or at least a threshold number of, fingerprint hashes match between the respective audio fingerprints. As an example, a threshold number might be 1, 2, or 3 fingerprint hashes out of the total number of fingerprint hashes. In a slight variation, the threshold number might be a percentage of fingerprint hashes that match, for example: at least 25% of the fingerprint hashes of the audio fingerprint of the first version match fingerprint hashes of an audio fingerprint of the second version. In a different example, the percentage may be one of: at least 10%, at least 20%, or at least 50%. In any event, fuzzy logic may be used to ascertain a match by setting the thresholds in an appropriate manner. The thresholds may be varied by experimentation and may depend on the type of audiovisual product. For instance, the thresholds may be different (e.g. higher) for a music video compared with a war film. This may be because a music video may be expected not to have additional sound effects added, overlaying (and arguably ruining) the music, whereas a war film may have all manner of sound effects (e.g. guns, sirens, explosions) added in post-production, which make comparisons harder. Such sound effects should not influence where, for instance, dubbing or captions are to be added or revised, and so matching irrespectively of such additional sound effects is important.

If a match is not found (following the "N" branch of block 230), the method 200 returns to block 210. In addition, the audio fingerprint that has been identified within the first version 190 but has not been matched to an audio fingerprint of the second version 192 may be marked as such in a map, for example, map 195 of Figure 1, representing at least one of the first and second versions 190, 192 so that it is not selected again for matching. In this way, according to the present example, each audio fingerprint of the first version 190 will be processed at most once.

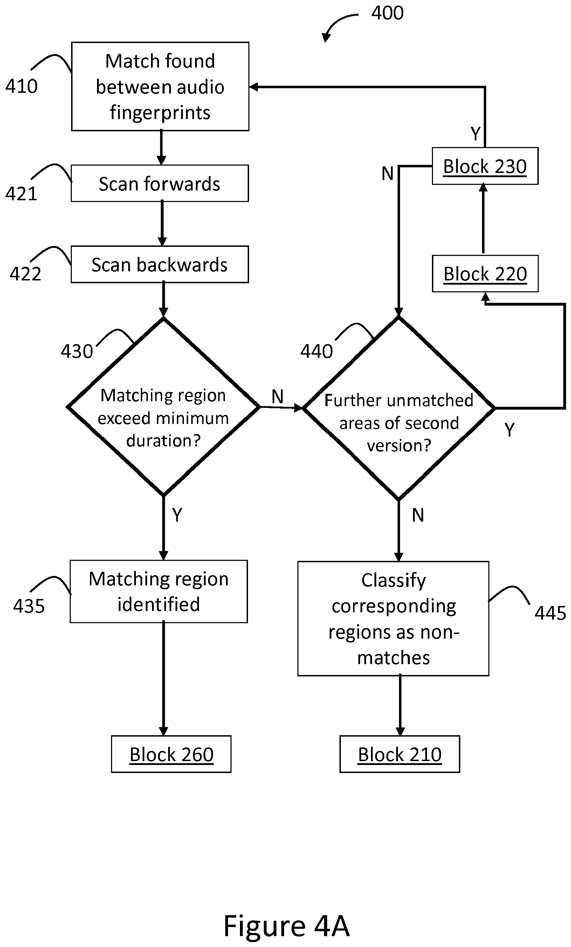

If a match is found (following the "Y" branch of block 230), the method 200 moves to block 240 where it is determined whether a corresponding region within the first and second versions is a matching region. In more detail, in block 240 it is determined whether a region comprising the temporal location of the identified audio fingerprint of the first version matches a corresponding region comprising the temporal location of the identified, matching audio fingerprint of the second version. The method of block 240 is described in more detail in relation to Figure 4A.

At block 240, the first and second versions 190, 192 of the audiovisual product are compared progressively away from the respective temporal locations to identify further matching audio fingerprints. Matching regions are discussed in more detail in relation to Figure 4A.

Next, at block 250 of method 200, a decision is made as to whether a matching region has been found. If a match has not been found (following the "N" branch of block 250), the method 200 returns to block 210. The corresponding regions between the first and the second versions that are not classified as matching are retained for future consideration in relation to different audio fingerprints. In addition, the audio fingerprints that have been matched but for which no matching region has been found are checked against the rest of the second version of the audiovisual product to determine whether there is a matching region in another part of the second version of the audiovisual product. If no matching region is found, the audio fingerprints of the first version do not map to the second version and may be marked in a map, for example map 195 of Figure 1, representing at least one of the first and second versions 190, 192 so that they are not selected again for matching. This is explained in further detail in relation to Figure 4A.

If a match is found (following the "Y" branch of block 250), the method 200 moves to block 260 where an indication of the temporal location of the respective matching region is stored in a map representing at least one of the first and second versions 190, 192. The matched regions are then removed from future consideration. In this way, the area of the first version from which an audio fingerprint may be selected is reduced and the area of the second version in which a matching fingerprint is searched for is reduced. This occurs for each iteration of the method 200.

The method 200 may be repeated until a sufficient number of matching regions have been identified, for example, until all possible matching regions between the versions of the audiovisual product have been identified and all the first version audio fingerprints 191 outside the matching regions have been found not to exist within the second version 192 of the audiovisual product. In another example, the method 200 may be repeated until a number of fingerprints processed since the last region match was found exceeds a threshold. In this way, the method can be aborted before using unnecessary computational effort and time. In this way, the method 200 can be aborted quickly if the first and second versions do not contain any matching regions.

The audio fingerprints 191, 193 for the first and second versions 190, 192 are pre-calculated before the matching process 200 begins. The audio fingerprints 191 and 192 are for the entirety of the respective versions of the audiovisual product. In another example, the audio fingerprints in question may correspond to one or more sections of the first and second versions of the audiovisual product. In one example, the pre-calculation may be carried out by the processing engine 120 of apparatus 100, in which case the pre-calculation would still occur prior to the matching process. The memory 140 may store the pre-calculated audio fingerprints. In this example, the identifying of block 210 and the searching of block 220 may be carried out with reference only to the stored audio fingerprints. In an alternative example, the audio fingerprints may be calculated in real-time so that the calculation process and the matching process occur concurrently.

As described above in relation to Figure 3, before the mapping method 200 is carried out, the first version 190 and the second version 192 of the audiovisual product consist of unprocessed audiovisual content. As the mapping method 200 is carried out and matching regions between the two versions of the audiovisual products are found, the first version 190 and the second version 192 of the audiovisual product consist of areas of unprocessed audiovisual content and areas of processed audiovisual content. In one example, the mapping method 200 terminates when all the audiovisual content of the first version 190 is processed audiovisual content.

Referring to Figure 4A, a computer-implemented method 400 of mapping regions of an audiovisual product is shown. Specifically, the method 400 provides greater detail to the matching region process of method 200.

At block 410, a match is found between an audio fingerprint of the first version and an audio fingerprint of the second version of the audiovisual product. Block 410 corresponds to a result of the determination at block 230 of Figure 230.

Next, at blocks 421 and 422, the method 400 proceeds to determine a matching region comprising the temporal locations of the matching audio fingerprints in the first and second versions of the audiovisual product.

At block 421, corresponding regions within the first version 190 and the second version 192 of the audiovisual product temporally succeeding the matching respective fingerprints are scanned (also referred to as forward-scanned) for further matching fingerprints. The forward scanning occurs simultaneously for the first version 190 and the second version 192.

The forward scan continues until a matching threshold is reached. The matching threshold defines the maximum permissible time difference between the temporal location of the most recent matched audio fingerprints and the temporal location of the previous matched audio fingerprints. In other words, scanning stops if the forward scan reaches the matching threshold time difference without determining a match. In this way, a matching region will avoid inaccurately classifying large areas of unmatched audiovisual content as matched audiovisual content. In other words, the matching threshold is used to reduce the likelihood of false positives, where regions that do not match are classified as part of a broader matching region. In one example, a matching threshold may be 30 seconds. In which case, if a temporal distance from the last-matched audio fingerprint exceeds 30 seconds, the boundary of the classified matching region reverts to the temporal location of the last-matched audio fingerprint, rather than extending to the 30 second boundary.

The matching threshold is chosen to be larger than a time difference that is commonly identified between matching fingerprints yet be as small as possible. In this way, a section that is replaced with a different section of equal length (but not containing any matching fingerprints) is not considered part of a larger matching region. Thus, the accuracy of matches and the quality of the overall matching process is increased. In addition, common regions of differences between the versions of the audiovisual product are easily identified.

Following the forward scan, at block 422, corresponding regions within the first version 190 and the second version 192 of the audiovisual product temporally preceding the matching respective fingerprints are scanned (also referred to as backward-scanned) for further matching fingerprints. As for the forward scan, the backward scan is carried out until a matching threshold is reached. The matching threshold may be the same as or different from the forward-scanned matching threshold.

In another example, the backward scan may occur before the forward scan. In a further example, only one of the forward and backward scans may be carried out.

Next, at block 430, a decision is made as to whether a matching region within the first and second versions exceeds a minimum duration. If an identified matching region exceeds the minimum duration (following the "Y" branch) a matching region is identified, block 435, and the method 400 proceeds to block 260 described in relation to Figure 3. The minimum duration is a minimum permissible time period between the earliest matched audio fingerprint and the latest matched audio fingerprint. The minimum duration sets a minimum duration of an acceptable matching region so that identified matching regions are of a sufficient length. Use of a minimum duration reduces the likelihood of a false positive since the longer a matching region is the more likely it is to be a correctly matched region.

In on example, the minimum duration may be set to avoid matching stock sound effects (for example, drum beats or gun shots) that may be used in multiple locations in an audiovisual product.

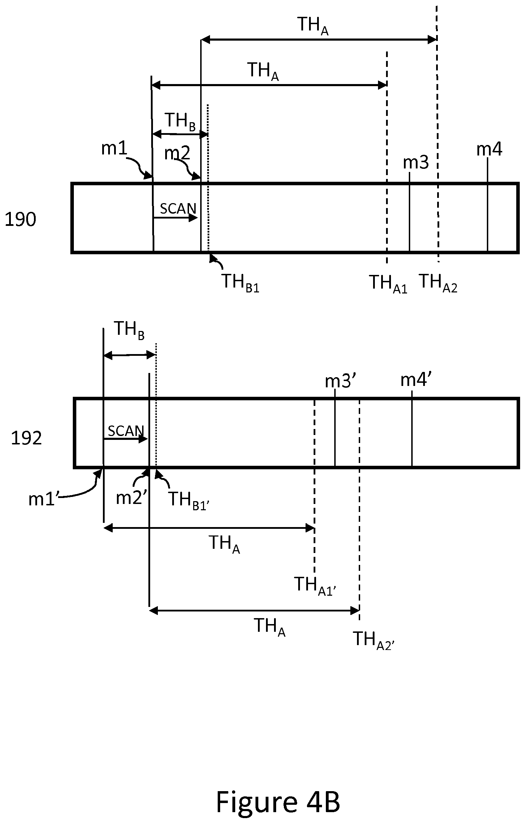

The matching threshold and the minimum duration threshold are discussed in more detail in relation to Figure 4B.

If an identified matching region does not exceed the minimum duration, no matching region is identified, (following the "N" branch) and the method 400 proceeds to block 440, where a determination is made as to whether there are further unmatched areas of the second version 192 to assess.

If there are no further unmatched areas of the second version to assess in respect of the previously-identified audio fingerprint of the first version (following the "N" branch) the region of the first version 190 is classified as a non-matched region in block 445 whilst the region of the second version 192 is retained for consideration in a future iteration of the matching process, and the method 400 proceeds to block 210, as previously described in relation to Figure 3. In one example, an indication of the non-matched region of the first version 190 may be stored in a map representative of the first version 190 (as described in relation to block 260 of Figure 3).

If there are remaining unmatched areas of the second version 192 to assess in respect of the previously-identified audio fingerprint of the first version (following the "Y" branch from block 440) the method 400 proceeds to blocks 220 and 230, where a further search is carried out in a remaining unmatched area of the second version 192 for a matching audio fingerprint to the already-identified fingerprint of the first version. The searching process of block 220 searches the largest remaining unmatched area of the second version 192 first and if no match is found, the method 400 returns to block 440 (following the "N" branch from block 230) so that a next largest remaining unmatched area can be searched. If a match is found (following the "Y" branch) the method advances back to block 410. In this way, as the matching region method 400 progresses there is less audiovisual content in each of the first and second versions to compare and the shorter matching regions are identified in the later stages of the method 400, which reduces the likelihood of false positives. Moreover, even if a false positive was identified, this will have a reduced impact on the overall matching process, because the larger areas of audiovisual content between the two versions are already matched.

In a variation to the method 400, before a matching region is identified in block 435, and subsequently recorded in block 260, a check may be performed in the other unmatched areas of the second version 192 for matching audio fingerprints and corresponding matching regions so that the longest matching region can be identified and recorded (block 260).

Figure 4B is a schematic diagram of an implementation of mapping regions, as described in relation to Figure 4A.

A matching pair of audio fingerprints in the first version 190 and the second version 192 of the audiovisual product are depicted as m1 and m1'. A matching threshold, TH_{A}, represents the maximum permissible time difference between the temporal location of the matched audio fingerprints m1 and m1' and the temporal location of a further matching pair of audio fingerprints. In one example, the matching threshold may be 30 seconds or less or more, for example two minutes, although other periods may be selected based on the kind of audiovisual product.

For example, according to one scenario, as a scan is performed, matching audio fingerprints m2 and m2' are identified. Fingerprints m2 and m2' are associated with respective temporal locations within the matching threshold, in other words, before the respective upper limits, TH_{A1} and TH_{A1'}, of the matching threshold, TH_{A}. In this case, the matching threshold, TH_{A}, is reset to begin from the temporal locations of fingerprints m2 and m2' and therefore extends from the temporal locations of fingerprints m2 and m2' for the duration TH_{A}, to new upper limits TH_{A2} and TH_{A2'}, and the scan continues. In this way, the matching threshold region is advanced from the latest-found matching pair of audio fingerprints.

In one scenario, after matching fingerprints m2 and m2', scanning continues and matches fingerprints m3 and m3'. As the match falls within the shifted upper limits, TH_{A2} and TH_{A2'}, the upper limits are again shifted by an amount TH_{A} (although, the new upper limits are not depicted in Figure 4B).

In an alternative scenario, in which the next pair of matching fingerprints after m2 and m2' are m4 and m4' (rather than m3 and m3') it will be seen that, because m4 and m4' appear after the upper limits TH_{A2} and TH_{A2'}, scanning will halt at the upper limits TH_{A2} and TH_{A2'} and fingerprints m4 and m4' will not in practice be found. If, on the other hand, fingerprints m3 and m3' had been matched, then it will be appreciated that the upper limit TH_{A2} and TH_{A2'} will have been advanced and fingerprints m4 and m4' would be matched.

In summary, matching continues through the versions 190 and 192 until a matching pair of audiovisual fingerprints is not detected before the (advanced) upper limits are reached.

A minimum duration threshold, TH_{B}, is also shown in Figure 4B. As previously described, the minimum duration threshold is a minimum permissible time period between the earliest-matched audio fingerprint and the latest-matched audio fingerprint for a matching region to be identified as such. In one example, the minimum duration threshold may be 10 seconds, 20 seconds, or 30 seconds. Other durations may be selected based on the kind of audiovisual product.

The minimum duration threshold, TH_{B}, within the first and second versions 190, 192, extends from the earliest matched respective audio fingerprints m1, m1' to the respective upper limits TH_{B1} and TH_{B1'}.

Accordingly, if the only matching pair of fingerprints after m1 and m1' and before the upper threshold is found to be within the minimum duration threshold, TH_{B}, then the respective matching fingerprints are discounted and there is deemed to be no matching region. If, on the other hand, a further pair of matching audio fingerprints, mn and mn', are detected within the first and second versions 190, 192, after the minimum duration threshold, TH_{B}, and before the respective upper limits, then a region extending from the earliest matched audio fingerprints, m1 and m1', to the further pair of matching audio fingerprints, mn and mn', is of sufficient length to be determined as a matching region.

The scan within Figure 4B is depicted as a forward scan. The implementation of Figure 4B is also applicable to a backward scan.

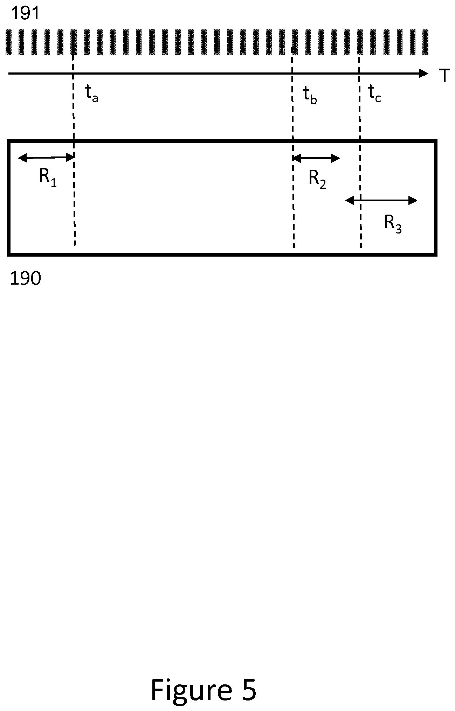

Figure 5 illustrates examples of matching regions, as determined in the foregoing methods 200 and 400. A matching region comprising a temporal location of the first version 190 may be one of the following: a region before a temporal location, tₐ, of an identified audio fingerprint (region Ri), a region after a temporal location, t_{b}, of the identified audio fingerprint (region R₂), or a region spanning a temporal location, t_{c}, of the identified audio fingerprint (so before and after - region R₃).

Each of regions R₁-R₃ satisfy a minimum duration threshold and therefore are classified as matching regions. In the context of the example, "before the temporal location" is used in relation to time and has an equivalent meaning to an earlier time, i.e. "prior to the temporal location". Similarly, "after the temporal location" is also used in relation to time and has an equivalent meaning to a later time, i.e. "post the temporal location". In addition, "spanning the temporal location" means that the region overlaps and encompasses the temporal location of the identified audio fingerprint. The overlap may be equal on either side of the temporal location. Alternatively, the overlap may have a greater proportion before the temporal location than after the temporal location, and vice versa.

In one example, the region R₁ of the first version 190 of the audiovisual product may be compared to a corresponding region (a region of the same duration as R₁ and also in the corresponding location, that is, before the temporal location of the identified audio fingerprint in the second version) within the second version 192 of the audiovisual product to determine whether there is a matching region. In the comparison, the audio fingerprint(s) associated with region R₁ are compared to the audio fingerprints associated with the corresponding region of the second version. A match is found between the regions if a matching threshold is met, where the matching threshold may be a number or proportion of matched audio fingerprints. In other words, by using fuzzy logic it is not necessary to match every audio fingerprint to declare that regions match. A match is not found between the regions under investigation if the matching threshold is not met. In this case, whilst an identified audio fingerprint of the first version audio fingerprints 191 occurs at a time tₐ, the matched audio fingerprint within the second version audio fingerprints 193 may occur at time tₐ+20 minutes, referred to herein as time t_{a'}. Thus, a region of the first version 190, such as region R₁, that covers a time from tₐ-5 minutes up until the temporal location of the identified audio fingerprint, tₐ, would correspond to a region covering from time t_{a'}-5 minutes up until time t_{a'} in the second version 192.

In addition, in the previously described matching methods 200 and 400, a lower matching region threshold may be used. In this case, no matching region is determined to be found if a further audio fingerprint match is not found within a specified temporal distance (a lower matching region threshold) from the respective temporal locations of the already-identified matching audio fingerprints. As an example, the lower matching threshold may be, say, one minute, so if no further matching audio fingerprints are found within one minute of the temporal location of the second version, then there is deemed to be no matching region. However, if a further match is identified within the specified temporal distance of the temporal location within the corresponding region of the audio fingerprint in the second version, then the matching query continues and an extended region is considered for a match. In this way, the matching region is extended until no further matches are found within a matching threshold, as described in relation to method 400.

In more detail, the matching threshold may be considered as a time duration that represents a gap in a region of both the first and second versions (without a match occurring) that is too large for the matching region to be extended across. For example, a threshold temporal distance may be 30 seconds, which means that a gap of 30 seconds or above (without a match occurring) is too large for the matching region to extend across. In this example, a gap of duration less than 30 seconds, for example 10 seconds (when a match occurs), would be considered to be small enough for the matching region to extend across.

The methods 200 and 400 enable matching regions of first and second versions of an audiovisual product to be identified even in a case when the sections of audiovisual content forming the second version are re-ordered relative to the first version.

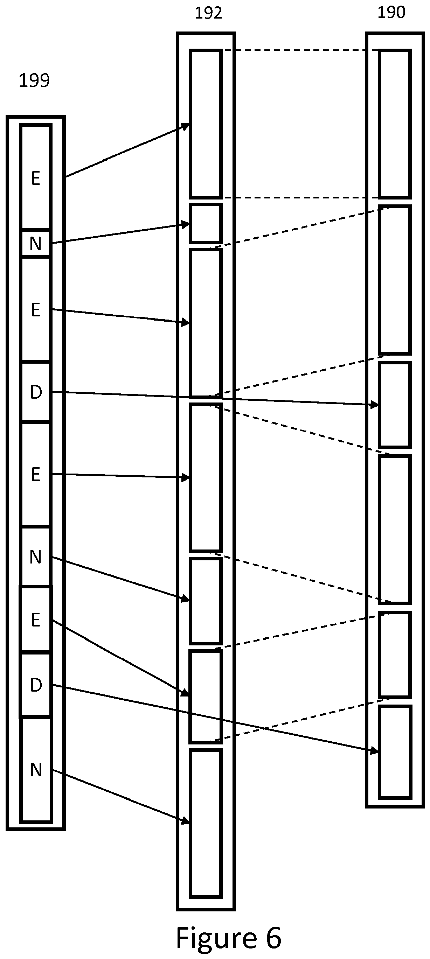

Figure 6 is a schematic illustration of a map 199 that maps the relationship between audiovisual content of an older version of an audiovisual product, such as a first version 190, and audiovisual content of a newer version of the audiovisual product, such as a second version 192. In this example, the map 199 depicts the temporal locations of sections of the audiovisual product. The map 199 contains sections, labelled "E", that exist in both the first version 190 and the second version 192 of the audiovisual product. The map also contains sections, labelled "N", that exist only in the second version 192 and are thereby new sections relative to the first version 190. In addition, the map 199 contains sections, labelled "D", that exist only in the first version 190 and are thereby deleted sections relative to the first version 190.

The dashed lines extending between the first version 190 and the second version 192 illustrate how the sections of the first version 190 may change location when the second version 192 of the audiovisual product is created. The arrows extending from the map 199 to the sections of the first and second versions 190, 192 illustrate how the labelled sections of the map 199 relate to the sections of audiovisual content in the first and second version 190, 192.

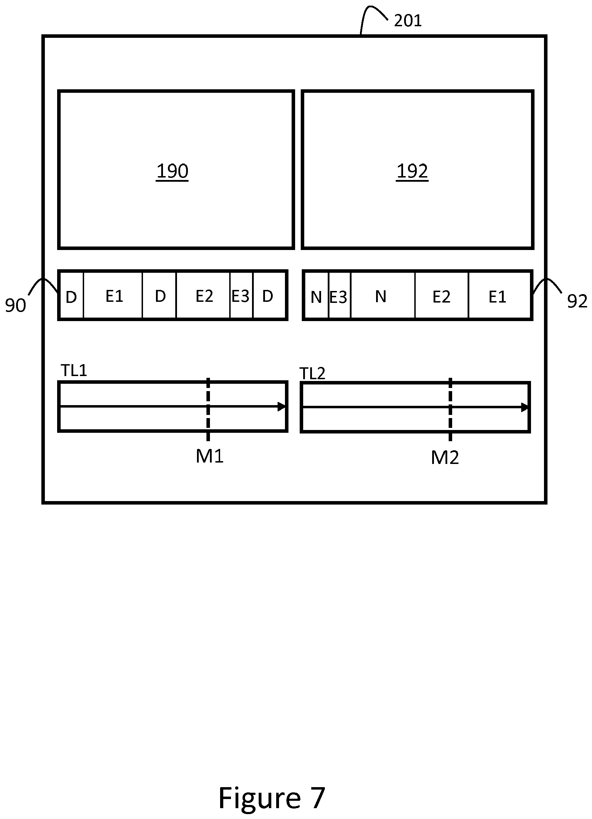

Figure 7 is a schematic diagram of a user interface 201 depicting the first version 190 alongside the second version 192 of the audiovisual product. The user interface 201 has a map 90 associated with the first version and a map 92 associated with the second version, along with corresponding timelines TL1 and TL2.

The map 90 depicts the relationship between sections of the first version 190 relative to the second version 192. In this example, the map 90 shows that three sections of the first version, sections E1, E2 and E3 exist in both the first version 190 and the second version 192 of the audiovisual product.

The map 92 depicts the relationship between sections of the second version 192 relative to the first version 190. In this example, the map 92 shows the three sections E1, E2, and E3 that exist in both the first and second version 90, 92. In addition, the map 92 shows sections within the second version that are new relative to the first version 190.

Regions E1, E2, E3 of the first version 190 are also present in the second version 192, but not in the same order, as shown by map 92. Each of the maps 90 and 92 may be generated by the herein described methods 200 and 400.

The timeline TL1 contains a marker M1 and the timeline TL2 contains a marker M2. The markers M1 and M2 depict the temporal location of the respective versions 190, 192 along the respective timelines TL1, TL2. The positions of the markers M1 and M2 along the timelines TL1, TL2 each align with a section of the respective map labelled "E2", so frames depicted by the user interface 201 at the time associated with markers M1 and M2 in both the first version 190 section of the user interface and the second version 192 section of the user interface are present in both versions of the audiovisual product.

The markers traverse the timelines as the audiovisual product is played back. The user of the system is able to establish immediately, by reference to the sections labelled N, which sections potentially need fresh additional content. The sections marked D are included for the sake of completeness in the present example; and may be omitted in other examples.

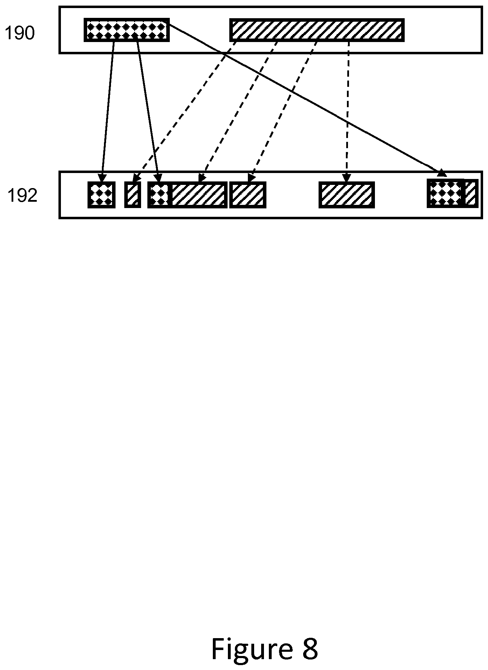

Figure 8 is an example of a relationship between audiovisual content of the first version 190 and the second version 192 of the audiovisual product. The first version 190 contains two sections of audiovisual content that match to regions within the second version 192. The two sections are depicted by a first block containing a first pattern (diamond) and a second block containing a second pattern (diagonal). As shown by the solid-line arrows, the first matching section of the first version 190 exists in the second version 192 but in three sections. Likewise, the second matching section of the first version 190 exists in the second version 192, but in four sections. The matching regions can be used to synchronise or transfer additional content of the first version 190 with the second version 192 of the audiovisual product. As discussed above, the additional content may be one or both of textual content (for example, captions and subtitles) and audio content (dubbing content).

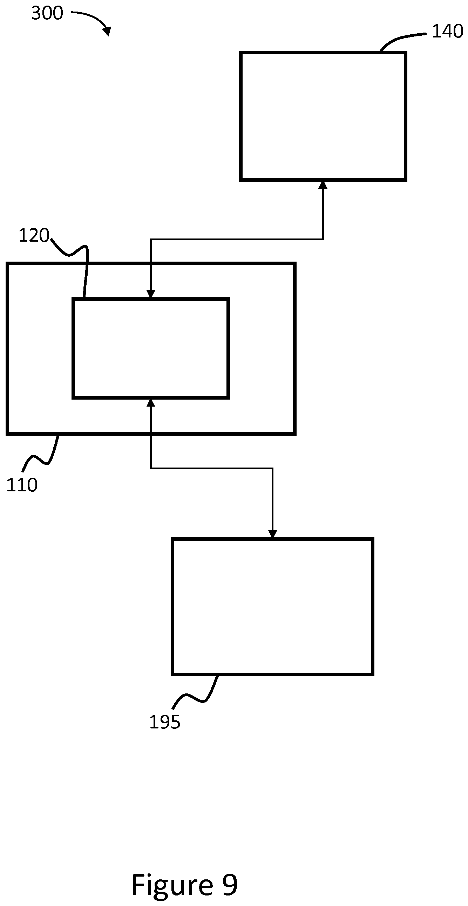

Figure 9 shows an example audiovisual product mapping system 300. The system 300 has a control system 110, a map 195, and a memory 140. The control system 110 contains the processing engine 120 of Figure 1. The map 195 is coupled to the processing engine 120. In this example, the map 195 is stored in a different storage area to the memory 140.

The various embodiments described herein are presented only to assist in understanding and teaching the claimed features. These embodiments are provided as a representative sample of embodiments only and are not exhaustive and/or exclusive. It is to be understood that advantages, examples, functions, features, structures, and/or other aspects described herein are not to be considered limitations on the scope of the invention as defined by the claims, and that other embodiments may be utilised, and modifications may be made without departing from the scope of the claimed invention.

## Claims

1. An apparatus for mapping versions of an audiovisual product comprising:
a processing engine configured to perform a process to:
identify an audio fingerprint associated with a temporal location within a first version of an audiovisual product;
search for an audio fingerprint associated with a temporal location within a second version of the audiovisual product, which matches the audio fingerprint associated with the temporal location within the first version, to identify a first matching pair of audio fingerprints in the first version and the second version of the audiovisual product;
if a first matching pair of audio fingerprints is found,
determine whether a region comprising the temporal location associated with the audio fingerprint within the first version matches a corresponding region comprising the temporal location associated with the audio fingerprint within the second version by comparing the versions progressively away from the respective temporal locations to identify at least one further matching pair of audio fingerprints and thereby identify a matching region comprising the first matching pair of audio fingerprints and the at least one further matching pair of audio fingerprints in the first version and the second version of the audiovisual product; and
if a matching region is found,
store in a map representing at least one of the first and second versions, an indication of the temporal location of the matching region; and
repeat the process by identifying further first matching pairs of audio fingerprints associated with temporal locations outside of any matching region(s), identifying further matching regions based on said further first matching pairs of audio fingerprints, and updating the map with indications of the temporal locations of the further matching regions.

2. The apparatus of claim 1, wherein if no further matching pair of audio fingerprints is identified within a certain temporal distance of the temporal location of the second version then there is no matching region.

3. The apparatus of claim 1, wherein if at least one further matching pair of audio fingerprints is identified within a certain temporal distance of the temporal location of the second version then there is a matching region.

4. The apparatus of any preceding claim, wherein the matching region grows until no further matching pairs of audio fingerprints are found within a threshold temporal distance of the respective temporal locations of a latest-found matching pair of audio fingerprints.

5. The apparatus of any preceding claim, wherein each audio fingerprint comprises a fingerprint hash associated with a respective temporal location.

6. The apparatus of claim 5, wherein the respective temporal location comprises a section of audiovisual content and each audio fingerprint is generated based on a frequency characteristic representative of one or more peak frequency components within the section.

7. The apparatus of claim 6, wherein a matching pair of audio fingerprints is found when a threshold number of audio fingerprint hashes match between the respective audio fingerprints.

8. The apparatus of any preceding claim, wherein to identify an audio fingerprint associated with a temporal location within the first version of the audiovisual product, the processing engine is configured to randomly select an audio fingerprint associated with a temporal location within the first version of the audiovisual product.

9. A computer-implemented method of mapping versions of an audiovisual product, the method comprising performing a process comprising:
identifying an audio fingerprint associated with a temporal location within a first version of an audiovisual product;
searching for an audio fingerprint associated with a temporal location within a second version of the audiovisual product, which matches the audio fingerprint associated with the temporal location within the first version, to identify a first matching pair of audio fingerprints in the first version and the second version of the audiovisual product;
if a first matching pair of audio fingerprints is found,
determining whether a region comprising the temporal location associated with the audio fingerprint within the first version matches a corresponding region comprising the temporal location associated with the audio fingerprint within the second version by comparing the versions progressively away from the respective temporal locations to identify at least one further matching pair of audio fingerprints and thereby identify a matching region comprising the first matching pair of audio fingerprints and the at least one further matching pair of audio fingerprints in the first version and the second version of the audiovisual product; and
if a matching region is found,
storing in a map representing at least one of the first and second versions, an indication of the temporal location of the matching region; and
repeating the process by identifying further first matching pairs of audio fingerprints associated with temporal locations outside of any matching region(s), identifying further matching regions based on said further first matching pairs of audio fingerprints, and updating the map with indications of the temporal locations of the further matching regions.

10. A computer readable medium comprising instructions for mapping versions of an audiovisual product that, when executed by a processing engine, cause the processing engine to perform a process to:
identify an audio fingerprint associated with a temporal location within a first version of an audiovisual product;
search for an audio fingerprint associated with a temporal location within a second version of the audiovisual product, which matches the audio fingerprint associated with the temporal location within the first version, to identify a first matching pair of audio fingerprints in the first version and the second version of the audiovisual product;
if a first matching pair of audio fingerprints is found,
determine whether a region comprising the temporal location associated with the audio fingerprint within the first version matches a corresponding region comprising the temporal location associated with the audio fingerprint within the second version by comparing the versions progressively away from the respective temporal locations to identify at least one further matching pair of audio fingerprints and thereby identify a matching region comprising the first matching pair of audio fingerprints and the at least one further matching pair of audio fingerprints in the first version and the second version of the audiovisual product; and
if a matching region is found,
store in a map representing at least one of the first and second versions, an indication of the temporal location of the matching region; and
repeat the process by identifying further first matching pairs of audio fingerprints associated with temporal locations outside of any matching region(s), identifying further matching regions based on said further first matching pairs of audio fingerprints, and updating the map with indications of the temporal locations of the further matching regions.

11. The computer-implemented method of claim 9, further comprising:
adding additional content to the second version of the audiovisual product by:
using the map to identify at least one of:
new regions of the second version of the audiovisual product; and
matching regions of the second version of the audiovisual product;
and
adding additional content to at least one of the new regions and the matching regions.

12. The computer-implemented method of claim 11, wherein the audiovisual content comprises at least one of textual content and audio content.

13. The computer-implemented method of claim 12, wherein the audio content comprises dubbing content.

14. The computer-implemented method of claim 12 or 13, wherein the textual content comprises at least one of captioning content and subtitling content.

## Patentansprüche

1. Vorrichtung zum Zuordnen von Versionen eines audiovisuellen Produkts, die Folgendes umfasst:
eine Verarbeitungs-Engine, die konfiguriert ist, um einen Vorgang für Folgendes durchzuführen:
Identifizieren eines Audiofingerabdrucks, der mit einer zeitlichen Stelle innerhalb einer ersten Version eines audiovisuellen Produkts verknüpft ist;
Suchen nach einem Audiofingerabdruck, der mit einer zeitlichen Stelle innerhalb einer zweiten Version des audiovisuellen Produkts verknüpft ist, der mit dem Audiofingerabdruck übereinstimmt, der mit der zeitlichen Stelle innerhalb der ersten Version verknüpft ist, um ein erstes übereinstimmendes Paar von Audiofingerabdrücken in der ersten Version und der zweiten Version des audiovisuellen Produkts zu identifizieren;
falls ein erstes übereinstimmendes Paar von Audiofingerabdrücken gefunden wird,
Bestimmen, ob ein Bereich, der die zeitliche Stelle umfasst, die mit dem Audiofingerabdruck innerhalb der ersten Version verknüpft ist, mit einem entsprechenden Bereich übereinstimmt, der die zeitliche Stelle umfasst, die mit dem Audiofingerabdruck innerhalb der zweiten Version verknüpft ist, durch Vergleichen der Versionen fortlaufend von den jeweiligen zeitlichen Stellen weg, um wenigstens ein weiteres übereinstimmendes Paar von Audiofingerabdrücken zu identifizieren und wobei dadurch ein übereinstimmender Bereich identifiziert wird, der das erste übereinstimmende Paar von Audiofingerabdrücken und das wenigstens eine weitere übereinstimmende Paar von Audiofingerabdrücken in der ersten Version und der zweiten Version des audiovisuellen Produkts umfasst; und
falls ein übereinstimmender Bereich gefunden wird,
Speichern, in einer Zuordnung, die die erste und/oder die zweite Version darstellt, einer Angabe der zeitlichen Stelle des übereinstimmenden Bereichs; und
Wiederholen des Vorgangs durch Identifizieren weiterer erster übereinstimmender Paare von Audiofingerabdrücken, die mit zeitlichen Stellen außerhalb (eines) beliebigen/r übereinstimmenden/r Bereichs/-e verknüpft sind, Identifizieren weiterer übereinstimmender Bereiche basierend auf den weiteren ersten übereinstimmenden Paaren von Audiofingerabdrücken und Aktualisieren der Zuordnung mit Angaben der zeitlichen Stellen der weiteren übereinstimmenden Bereiche.

2. Vorrichtung nach Anspruch 1, wobei, falls kein weiteres übereinstimmendes Paar von Audiofingerabdrücken innerhalb eines feststehenden zeitlichen Abstands von der zeitlichen Stelle der zweiten Version identifiziert wird, dann kein übereinstimmender Bereich vorhanden ist.

3. Vorrichtung nach Anspruch 1, wobei, falls wenigstens ein weiteres übereinstimmendes Paar von Audiofingerabdrücken innerhalb eines feststehenden zeitlichen Abstands von der zeitlichen Stelle der zweiten Version identifiziert wird, dann ein übereinstimmender Bereich vorhanden ist.

4. Vorrichtung nach einem der vorhergehenden Ansprüche, wobei der übereinstimmende Bereich wächst, bis keine weiteren übereinstimmenden Paare von Audiofingerabdrücken innerhalb eines zeitlichen Schwellenabstands von den jeweiligen zeitlichen Stellen eines zuletzt gefundenen übereinstimmenden Paars von Audiofingerabdrücken gefunden werden.

5. Vorrichtung nach einem der vorhergehenden Ansprüche, wobei jeder Audiofingerabdruck einen Fingerabdruck-Hash umfasst, der mit einer jeweiligen zeitlichen Stelle verknüpft ist.

6. Vorrichtung nach Anspruch 5, wobei die jeweilige zeitliche Stelle einen Abschnitt von audiovisuellem Inhalt umfasst und jeder Audiofingerabdruck basierend auf einem Frequenzmerkmal erzeugt wird, das für eine oder mehrere Spitzenfrequenzkomponenten innerhalb des Abschnitts darstellend ist.

7. Vorrichtung nach Anspruch 6, wobei ein übereinstimmendes Paar von Audiofingerabdrücken gefunden wird, wenn eine Schwellenanzahl von Audiofingerabdruck-Hashes zwischen den jeweiligen Audiofingerabdrücken übereinstimmt.

8. Vorrichtung nach einem der vorhergehenden Ansprüche, wobei, um einen Audiofingerabdruck zu identifizieren, der mit einer zeitlichen Stelle innerhalb der ersten Version des audiovisuellen Produkts verknüpft ist, die Verarbeitungs-Engine konfiguriert ist, um einen Audiofingerabdruck, der mit einer zeitlichen Stelle innerhalb der ersten Version des audiovisuellen Produkts verknüpft ist, zufällig auszuwählen.

9. Computerimplementiertes Verfahren zum Zuordnen von Versionen eines audiovisuellen Produkts, wobei das Verfahren das Durchführen eines Vorgangs umfasst, der Folgendes umfasst:
Identifizieren eines Audiofingerabdrucks, der mit einer zeitlichen Stelle innerhalb einer ersten Version eines audiovisuellen Produkts verknüpft ist;
Suchen nach einem Audiofingerabdruck, der mit einer zeitlichen Stelle innerhalb einer zweiten Version des audiovisuellen Produkts verknüpft ist, der mit dem Audiofingerabdruck übereinstimmt, der mit der zeitlichen Stelle innerhalb der ersten Version verknüpft ist, um ein erstes übereinstimmendes Paar von Audiofingerabdrücken in der ersten Version und der zweiten Version des audiovisuellen Produkts zu identifizieren;
falls ein erstes übereinstimmendes Paar von Audiofingerabdrücken gefunden wird,
Bestimmen, ob ein Bereich, der die zeitliche Stelle umfasst, die mit dem Audiofingerabdruck innerhalb der ersten Version verknüpft ist, mit einem entsprechenden Bereich übereinstimmt, der die zeitliche Stelle umfasst, die mit dem Audiofingerabdruck innerhalb der zweiten Version verknüpft ist, durch Vergleichen der Versionen fortlaufend von den jeweiligen zeitlichen Stellen weg, um wenigstens ein weiteres übereinstimmendes Paar von Audiofingerabdrücken zu identifizieren und wobei dadurch ein übereinstimmender Bereich identifiziert wird, der das erste übereinstimmende Paar von Audiofingerabdrücken und das wenigstens eine weitere übereinstimmende Paar von Audiofingerabdrücken in der ersten Version und der zweiten Version des audiovisuellen Produkts umfasst; und
falls ein übereinstimmender Bereich gefunden wird,
Speichern, in einer Zuordnung, die die erste und/oder die zweite Version darstellt, einer Angabe der zeitlichen Stelle des übereinstimmenden Bereichs; und
Wiederholen des Vorgangs durch Identifizieren weiterer erster übereinstimmender Paare von Audiofingerabdrücken, die mit zeitlichen Stellen außerhalb (eines) beliebigen/r übereinstimmenden/r Bereichs/-e verknüpft sind, Identifizieren weiterer übereinstimmender Bereiche basierend auf den weiteren ersten übereinstimmenden Paaren von Audiofingerabdrücken und Aktualisieren der Zuordnung mit Angaben der zeitlichen Stellen der weiteren übereinstimmenden Bereiche.

10. Computerlesbares Medium, das Anweisungen zum Zuordnen von Versionen eines audiovisuellen Produkts umfasst, die, wenn sie durch eine Verarbeitungs-Engine ausgeführt werden, die Verarbeitungs-Engine veranlassen, einen Vorgang für Folgendes durchzuführen:
Identifizieren eines Audiofingerabdrucks, der mit einer zeitlichen Stelle innerhalb einer ersten Version eines audiovisuellen Produkts verknüpft ist;
Suchen nach einem Audiofingerabdruck, der mit einer zeitlichen Stelle innerhalb einer zweiten Version des audiovisuellen Produkts verknüpft ist, der mit dem Audiofingerabdruck übereinstimmt, der mit der zeitlichen Stelle innerhalb der ersten Version verknüpft ist, um ein erstes übereinstimmendes Paar von Audiofingerabdrücken in der ersten Version und der zweiten Version des audiovisuellen Produkts zu identifizieren;
falls ein erstes übereinstimmendes Paar von Audiofingerabdrücken gefunden wird,
Bestimmen, ob ein Bereich, der die zeitliche Stelle umfasst, die mit dem Audiofingerabdruck innerhalb der ersten Version verknüpft ist, mit einem entsprechenden Bereich übereinstimmt, der die zeitlichen Stelle umfasst, die mit dem Audiofingerabdruck innerhalb der zweiten Version verknüpft ist, durch Vergleichen der Versionen fortlaufend von den jeweiligen zeitlichen Stellen weg, um wenigstens ein weiteres übereinstimmendes Paar von Audiofingerabdrücken zu identifizieren und wobei dadurch ein übereinstimmender Bereich identifiziert wird, der das erste übereinstimmende Paar von Audiofingerabdrücken und das wenigstens eine weitere übereinstimmende Paar von Audiofingerabdrücken in der ersten Version und der zweiten Version des audiovisuellen Produkts umfasst; und
falls ein übereinstimmender Bereich gefunden wird,
Speichern, in einer Zuordnung, die die erste und/oder die zweite Version darstellt, einer Angabe der zeitlichen Stelle des übereinstimmenden Bereichs; und
Wiederholen des Vorgangs durch Identifizieren weiterer erster übereinstimmender Paare von Audiofingerabdrücken, die mit zeitlichen Stellen außerhalb (eines) beliebigen/r übereinstimmenden/r Bereichs/-e verknüpft sind, Identifizieren weiterer übereinstimmender Bereiche basierend auf den weiteren ersten übereinstimmenden Paaren von Audiofingerabdrücken und Aktualisieren der Zuordnung mit Angaben der zeitlichen Stellen der weiteren übereinstimmenden Bereiche.

11. Computerimplementiertes Verfahren nach Anspruch 9, das ferner Folgendes umfasst:
Hinzufügen von zusätzlichem Inhalt zu der zweiten Version des audiovisuellen Produkts durch Folgendes:
Verwenden der Zuordnung, um Folgendes zu identifizieren:
neue Bereiche der zweiten Version des audiovisuellen Produkts; und/oder
Übereinstimmende Bereiche der zweiten Version des audiovisuellen Produkts;
und
Hinzufügen von zusätzlichem Inhalt zu den neuen Bereichen und/oder den übereinstimmenden Bereichen.

12. Computerimplementiertes Verfahren nach Anspruch 11, wobei der audiovisuelle Inhalt Textinhalt und/oder Audioinhalt umfasst.

13. Computerimplementiertes Verfahren nach Anspruch 12, wobei der Audioinhalt Dubbing-Inhalt umfasst.

14. Computerimplementiertes Verfahren nach Anspruch 12 oder 13, wobei der Textinhalt Untertitelungsinhalte für Gehörlose und Hörgeschädigte und/oder Untertitelungsinhalte umfasst.

## Revendications

1. Appareil destiné à la mise en correspondance des versions d'un produit audiovisuel comprenant :
un moteur de traitement configuré pour effectuer un processus pour :
identifier une empreinte audio associée à un emplacement temporel à l'intérieur d'une première version d'un produit audiovisuel ;
rechercher une empreinte digitale audio associée à un emplacement temporel à l'intérieur d'une seconde version du produit audiovisuel, qui correspond à l'empreinte audio associée à l'emplacement temporel à l'intérieur de la première version, pour identifier une première paire d'empreintes digitales audio dans la première version et la seconde version du produit audiovisuel ;
si une première paire d'empreintes audio correspondante est trouvée,
déterminer si une région comprenant l'emplacement temporel associé à l'empreinte audio à l'intérieur de la première version correspond à une région correspondante comprenant l'emplacement temporel associé à l'empreinte audio à l'intérieur de la seconde version en comparant les versions progressivement éloignées des emplacements temporels respectifs pour identifier au moins une autre paire d'empreintes digitales audio correspondante et identifier ainsi une région correspondante comprenant la première paire d'empreintes digitales audio correspondante et l'au moins une autre paire d'empreintes digitales audio coreespondante dans la première version et la seconde version du produit audiovisuel ; et
si une région correspondante est trouvée,
stocker dans une carte représentant des première et/ou seconde versions, une indication de l'emplacement temporel de la région correspondante ; et
répéter le processus en identifiant d'autres premières paires d'empreintes digitales audio correspondantes associées à des emplacements temporels en dehors de toute(s) région(s) correspondante(s), en identifiant d'autres régions correspondantes sur la base desdites autres premières paires d'empreintes digitales audio correspondantes, et en mettant à jour la carte avec les indications des emplacements temporels des autres régions correspondantes.

2. Appareil selon la revendication 1, dans lequel si aucune autre paire d'empreintes digitales audio correspondante n'est identifiée à l'intérieur d'une certaine distance temporelle de l'emplacement temporel de la seconde version, alors il n'y a pas de région correspondante.

3. Appareil selon la revendication 1, dans lequel si au moins une autre paire correspondante d'empreintes digitales audio est identifiée à l'intérieur d'une certaine distance temporelle de l'emplacement temporel de la seconde version, alors il y a une région correspondante.

4. Appareil selon l'une quelconque des revendications précédentes, dans lequel la région correspondante se développe jusqu'à ce qu'aucune autre paire correspondante d'empreintes digitales audio ne soit trouvée à l'intérieur d'une distance temporelle seuil des emplacements temporels respectifs d'une paire d'empreintes digitales audio correspondante trouvée en dernier.

5. Appareil selon l'une quelconque des revendications précédentes, dans lequel chaque empreinte digitale audio comprend un hachage d'empreinte digitale associé à un emplacement temporel respectif.

6. Appareil selon la revendication 5, dans lequel l'emplacement temporel respectif comprend une section de contenu audiovisuel et chaque empreinte audio est générée sur la base d'une caractéristique de fréquence représentative d'une ou plusieurs composantes de fréquence de crête à l'intérieur de la section.

7. Appareil selon la revendication 6, dans lequel une paire d'empreintes digitales audio correspondante est trouvée lorsqu'un nombre seuil de hachages d'empreinte digitale audio correspondent entre les empreintes digitales audio respectives.

8. Appareil selon l'une quelconque des revendications précédentes, dans lequel pour identifier une empreinte digitale audio associée à un emplacement temporel à l'intérieur de la première version du produit audiovisuel, le moteur de traitement est configuré pour sélectionner de manière aléatoire une empreinte digitale audio associée à un emplacement temporel à l'intérieur de la première version du produit audiovisuel.

9. Procédé mis en oeuvre par ordinateur de mise en correspondance des versions d'un produit audiovisuel, le procédé comprenant la réalisation d'un processus comprenant :
l'identification d'une empreinte digitale audio associée à un emplacement temporel à l'intérieur d'une première version d'un produit audiovisuel ;
la recherche d'une empreinte digitale audio associée à un emplacement temporel à l'intérieur d'une seconde version du produit audiovisuel, qui correspond à l'empreinte audio associée à l'emplacement temporel à l'intérieur de la première version, pour identifier une première paire d'empreintes digitales audio correspondante dans la première version et la seconde version du produit audiovisuel ;
si une première paire d'empreintes audio correspondante est trouvée,
la détermination du fait de savoir si une région comprenant l'emplacement temporel associé à l'empreinte audio à l'intérieur de la première version correspond à une région correspondante comprenant l'emplacement temporel associé à l'empreinte audio à l'intérieur de la seconde version en comparant les versions progressivement éloignées des emplacements temporels respectifs pour identifier au moins une autre paire d'empreintes digitales audio correspondante et identifier ainsi une région correspondante comprenant la première paire d'empreintes digitales audio correspondante et l'au moins une autre paire d'empreintes digitales audio correspondante dans la première version et la seconde version du produit audiovisuel ; et
si une région correspondante est trouvée,
le stockage dans une carte représentant les première et/ou seconde versions, d'une indication de l'emplacement temporel de la région correspondante ; et
la répétition du processus en identifiant d'autres premières paires d'empreintes digitales audio correpsondantes associées à des emplacements temporels en dehors de toute(s) région(s) correspondante(s), en identifiant d'autres régions correspondantes sur la base desdites autres premières paires d'empreintes digitales audio correspondantes, et en mettant à jour la carte avec les indications des emplacements temporels des autres régions correspondantes.

10. Support lisible par ordinateur comprenant des instructions permettant de mettre en corrspondance des versions d'un produit audiovisuel qui, lorsqu'elles sont exécutées par un moteur de traitement, amènent le moteur de traitement à effectuer un processus à :
identifier une empreinte audio associée à un emplacement temporel à l'intérieur d'une première version d'un produit audiovisuel ;
rechercher une empreinte digitale audio associée à un emplacement temporel à l'intérieur d'une seconde version du produit audiovisuel, qui correspond à l'empreinte audio associée à l'emplacement temporel à l'intérieur de la première version, pour identifier une première paire d'empreintes digitales audio dans la première version et la seconde version du produit audiovisuel ;
si une première paire d'empreintes audio correspondante est trouvée,
déterminer si une région comprenant l'emplacement temporel associé à l'empreinte audio à l'intérieur de la première version correspond à une région correspondante comprenant l'emplacement temporel associé à l'empreinte audio à l'intérieur de la seconde version en comparant les versions progressivement éloignées des emplacements temporels respectifs pour identifier au moins une autre paire d'empreintes digitales audio correspondante et identifier ainsi une région correspondante comprenant la première paire d'empreintes digitales audio correspondante et l'au moins une autre paire d'empreintes digitales audio coreespondante dans la première version et la seconde version du produit audiovisuel ; et
si une région correspondante est trouvée,
stocker dans une carte représentant des première et/ou seconde versions, une indication de l'emplacement temporel de la région correspondante ; et
répéter le processus en identifiant d'autres premières paires d'empreintes digitales audio correspondantes associées à des emplacements temporels en dehors de toute(s) région(s) correspondante(s), en identifiant d'autres régions correspondantes sur la base desdites autres premières paires d'empreintes digitales audio correspondantes, et en mettant à jour la carte avec les indications des emplacements temporels des autres régions correspondantes.

11. Procédé mis en oeuvre par ordinateur selon la revendication 9, comprenant en outre : l'ajout de contenu supplémentaire à la seconde version du produit audiovisuel par :
utilisation de la carte pour identifier :
les nouvelles régions de la seconde version du produit audiovisuel ; et/ou les régions correspondantes de la seconde version du produit audiovisuel ; et/ou
l'ajout de contenu supplémentaire à des nouvelles régions et/ou des régions correspondantes.

12. Procédé mis en oeuvre par ordinateur selon la revendication 11, dans lequel le contenu audiovisuel comprend un contenu textuel et/ou un contenu audio.

13. Procédé mis en œuvre par ordinateur selon la revendication 12, dans lequel le contenu audio comprend le contenu de doublage.

14. Procédé mis en œuvre par ordinateur selon la revendication 12 ou 13, dans lequel le contenu textuel comprend le contenu de sous-titrage et/ou le contenu de sous-titrage adapté.
